# EUROPÄISCHE PATENTSCHRIFT

(11) **EP 1 431 606 B1**
(45) Veröffentlichungstag und Bekanntmachung des Hinweises auf die Patenterteilung: **26.04.2006**
(21) Anmeldenummer: 03027588.7
(22) Anmeldetag: 02.12.2003
(51) Int. Cl.: F16D 66/00

(54) **Brems-oder Kupplungsbelag mit integrierter Kraftmessung**
Brake or clutch lining with integrated force measurement
Patin de frein ou d'embrayage équipé d'un dispositif de mesure de force

(30) Priorität: 18.12.2002 DE 10259629
(43) Veröffentlichungstag der Anmeldung: 23.06.2004
(73) Patentinhaber: TMD Friction Services GmbH, 51381 Leverkusen (DE)
(72) Erfinder: DOHLE, Achim, 51375 Leverkusen (DE)
(74) Vertreter: Müller, Eckhard

(56) Entgegenhaltungen:
- EP-A- 1 199 491
- DE-A- 3 813 494
- DE-U- 29 800 635
- PATENT ABSTRACTS OF JAPAN Bd. 2000, Nr. 05, 14. September 2000 (2000-09-14) & JP 2000 062591 A (TOYOTA MOTOR CORP), 29. Februar 2000 (2000-02-29)

## Beschreibung

Die Erfindung betrifft ein Verfahren zum Messen von auf einen Reibbelag einer Bremse oder Kupplung aufgebrachten Kräften. Die Erfindung betrifft ferner einen Brems- oder Kupplungsbelag, der eine Trägerplatte und einen gegebenenfalls unter Zwischenschaltung einer Underlayerschicht auf der Trägerplatte angeordneten Reibbelag aufweist.

Es ist bekannt, Bremssysteme elektronisch zu überwachen. Dabei wird üblicherweise der Druck im Hydrauliksystem bzw. im pneumatischen System der Bremsanlage erfaßt. Die gewonnenen Daten lassen jedoch nur Rückschlüsse auf den hydraulischen bzw. pneumatischen Druck in dem jeweiligen Bremskreis zu. Dieser Druck entspricht nicht immer dem wahren Anpreßdruck des Reibbelags. JP-A-2000 062591, setzt ein brucksensor zwischen Kolben und Bremsbelag ein, zur messung der Betätigungskraft.

Es ist Aufgabe der Erfindung, eine Möglichkeit zu schaffen, mit der auf konstruktiv einfache Weise der wahre Anpreßdruck des Reibbelags in situ ermittelt werden kann.

Diese Aufgabe wird erfindungsgemäß gelöst durch ein Verfahren gemäß Anspruch 1.

Die funktionale Schicht kann beispielsweise eine piezoresistive Hartstoffschicht sein, die bei Verformung und/oder Druckbeaufschlagung ihren elektrischen Widerstand ändert. Die Erfindung gestattet es, daß aus dem ersten elektrischen Widerstand die unmittelbar auf jeden einzelnen Reibbelag einwirkenden Druckkräfte abgeleitet werden. Auf Basis der gewonnenen Daten ist die Optimierung eines Bremsverlaufes oder beispielsweise die Überwachung von Grenzwerten möglich.

Ein weiterer wesentlicher Vorteil der Erfindung besteht darin, daß die für die Widerstandsmessung notwendige funktionale Schicht kostengünstig ist und einfach in eine Bremse oder Kupplung eingebaut werden kann. Im übrigen ist auch der benötigte Platz denkbar gering, da eine derartige Schicht nur eine Dicke im Bereich von Bruchteilen von Millimetern bis zu einigen wenigen Millimetern aufweist.

Vorzugsweise werden zusätzlich oder alternativ zu den Druckkräften Kräfte in Umfangsrichtung des Reibbelags erfaßt.

Bei einem Brems- oder Kupplungsvorgang treten in aller Regel neben reinen Druckkräften auch Kräfte in Umfangsrichtung des Reibbelags auf. Es kann gewünscht sein, die Anteile der entsprechenden Kraftkomponenten an der Gesamtkraft genauer zu bestimmen. In wesentlicher Weiterbildung der Erfindung wird daher vorgeschlagen, daß ein zweiter elektrischer Widerstand einer im wesentlichen in Umfangsrichtung des Reibbelags belasteten zweiten funktionalen Schicht gemessen wird, wobei aus dem zweiten elektrischen Widerstand der Kraftanteil in Umfangsrichtung abgeleitet wird und wobei die aus dem ersten elektrischen Widerstand abgeleitete Kraft ggf. um den Kraftanteil in Umfangsrichtung korrigiert wird. Man erhält also eine genaue Aussage über die tatsächlich auf den Reibbelag wirkende Andruckkraft. Selbstverständlich läßt sich mit dem gleichen Prinzip auch eine Aussage über die tatsächliche Kraft in Umfangsrichtung des Reibbelags ableiten.

Während eine Bremsscheibe bei einen Bremsvorgang ohne weiteres mehrere 100° C heiß werden kann, liegt die maximale Temperaturschwankung an der der Bremsscheibe abgewandten Belagträgerrückenplatte in einer Größenordnung von lediglich ca. 100° C bis 150 ° C. In diesem Temperaturbereich arbeiten die Schichten hinreichend genau.

Für eine bessere Temperaturkompensation wird vorgeschlagen, daß ein dritter elektrischer Widerstand einer unbelasteten dritten funktionalen Schicht gemessen wird, wobei aus dem dritten Widerstand ein Temperaturanteil abgeleitet wird und wobei die aus dem ersten elektrischen Widerstand abgeleitete Kraft um den Temperaturanteil korrigiert wird. Es wird also eine mit Temperaturerhöhung einhergehende Änderung des Widerstandes der dritten funktionalen Schicht erfaßt und mit dem durch die erste funktionale Schicht gewonnenen Meßergebnis verrechnet. Gleichmaßen denkbar, wenn auch teurer, ist die Temperaturerfassung über gesonderte herkömmliche Temperatursensoren. Alternativ können ebenfalls aus Systemdaten wie Raddrehzahl, Wärmeleitfähigkeit und hydraulischem Bremsdruck Korrekturwerte gewonnen werden.

Die Aufgabe wird ferner gelöst durch einen Brems- oder Kupplungsbelag, mit einer Trägerplatte, einem gegebenenfalls unter Zwischenschaltung einer Underlayerschicht auf der Trägerplatte angeordneten Reibbelag und mindestens einer der Trägerplatte zugeordneten funktionalen Schicht zum Messen von auf den Reibbelag aufgebrachten Kräften, wobei die funktionale Schicht einen elektrischen Widerstand aufweist, der sich zumindest in einem Bereich mit der wirkenden Kraft ändert.

Ein derartiger Brems- oder Kupplungsbelag ist einfach aufgebaut. Die funktionale Schicht nimmt - wie eingangs erwähnt - nur ein geringstes Maß an Platz in Anspruch. Sie kann beispielweise zwischen dem Reibbelag bzw. der Underlayermasse und der Trägerplatte und/oder zwischen einer den Bremsbelag tragenden Halterung und der Trägerplatte angeordnet sein. Die funktionale Schicht ist also ein integraler Bestandteil des Brems- oder Kupplungsbelags. Gesonderte Sensoren, wie sie bisher notwendig waren, können entfallen.

Vorzugsweise erstreckt sich die funktionale Schicht im wesentlichen über die gesamte Längserstreckung des Reibbelags. Dies macht eine Kontaktierung der funktionalen Schicht besonders einfach. Sie kann an den Seiten des Reibbelags vorgesehen werden. Im übrigen ist eine großflächige Anordnung der funktionalen Schicht insgesamt günstiger, da der Einfluß von örtlichen Abweichungen abgeschwächt wird.

Alternativ können mehrere Felder von funktionalen Schichten angeordnet sein, die eine örtliche, sich über einen belasteten Reibbelag ändernde Kraft erfassen. Die Felder können beispielsweise streifenförmig ausgebildet sein. Ganz allgemein braucht die funktionale Schicht maximal so groß zu sein wie der tatsächlich belastete Bereich. Auf der dem Reibbelag abgewandten Seite der Trägerplatte wird eine kolbenbelastete Schicht also im wesentlichen die Größe der Kolbenquerschnittsfläche aufweisen.

Die funktionale Schicht kann ein- oder beidseitig mit einer Isolierung versehen sein. Eine derartige Isolierung ist abgestimmt sowohl auf die funktionale Schicht als auch auf gegebenenfalls angrenzende Schichten, wie z.B. die Underlayerschicht. Durchaus denkbar ist jedoch auch, daß keine Isolierung vorgesehen ist, sondern daß die funktionale Schicht unmittelbar auf der Trägerplatte angeordnet ist. Die Trägerplatte stellt dann einen im wesentlichen konstanten parallelen Widerstand dar, der bei der Datengewinnung berücksichtigt wird. Auch bei einer leitenden Umgebung der funktionalen Schicht ist also die Widerstandsänderung der funktionalen Schicht hinreichend genau meßbar.

Im Folgenden wird die Erfindung anhand eines bevorzugten Ausführungsbeispiels näher erläutert. Die Zeichnung zeigt in

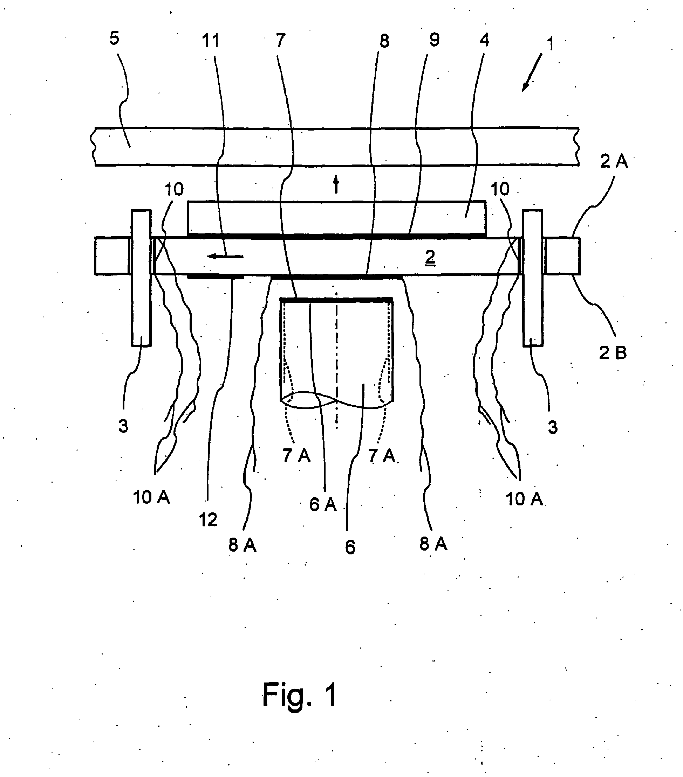

Figur 1 in schematischer Darstellung eine Seitenansicht einer erfindungsgemäßen Bremsanordnung.

Der Bremsbelag 1 weist eine Trägerplatte 2 auf, die rechts und links in der Figur durch eine Führungseinrichtung gehalten ist. In dem hier gezeigten Ausführungsbeispiel weist die Führungseinrichtung Holme 3 auf. Die Trägerplatte 2 ist auf den Holmen 3 verschiebbar gelagert.

Die Trägerplatte 2 weist eine Vorderseite 2A und eine Rückseite 2B auf. Auf der Vorderseite 2A ist ein Reibbelag 4 aufgebracht, der gegen eine Bremsscheibe 5 preßbar ist. Zwischen der Trägerplatte 2 und dem Reibbelag 4 kann eine (nicht gezeigte) Underlayerschicht vorgesehen sein.

Auf der Rückseite 2B der Trägerplatte 2 befindet sich ein Bremskolben 6, der mit einer Kolben-Druckfläche 6A auf die Trägerplatte 2 einwirken kann. Auf diese Weise wird der Bremsbelag 1 durch den Kolbendruck auf den Holmen 3 bewegt und mit dem Reibbelag 4 gegen die Bremsscheibe 5 gepreßt. Die Preßkraft des Reibbelages 4 gegen die Bremsscheibe 5 kann durch eine Mehrzahl von dem Bremsbelag 1 zugeordneten funktionalen Schichten 7, 8, 9 erfaßt werden, wobei nur aus Darstellungsgründen die funktionalen Schichten gemeinsam gezeigt sind. In der Praxis wird man in aller Regel nur jeweils eine der funktionalen Schichten wählen.

Die funktionale Schicht 7 befindet sich auf der Kolben-Andruckfläche 6A des Bremskolbens 6 und ist über zwei elektrisch leitende Drähte 7A kontaktiert. Die Drähte 7A sind im Innenbereich des Kolbens geführt und damit vor der Umgebung geschützt. Die bei einer Bremsung zwischen der Rückseite 2B der Trägerplatte 2 und der Kolben-Andruckfläche 6A wirkende Kraft ruft in der dazwischen liegenden funktionalen Schicht 7 eine Widerstandsänderung hervor, die über die Drähte 7A erfaßt wird. Aus der Widerstandsänderung läßt sich die Größe der Kraft bestimmen und damit der Bremsvorgang optimieren.

Die funktionale Schicht 7 verbleibt auch bei einem Austausch des Bremsbelages am Kolben 6 und erspart eine Verkabelung des Bremsbelages, die bei einem Austausch sonst gelöst und neu verbunden werden müßte.

Die funktionale Schicht 8 ist ebenfalls zwischen der Rückseite 2B der Trägerplatte 2 und der Kolben-Andruckfläche 6A angebracht, und zwar unmittelbar auf der Rückseite 2B der Trägerplatte 2. Die funktionale Schicht 8 ist über zwei Drähte 8A kontaktiert. Die Widerstandsänderung dieser funktionalen Schicht 8 ist ebenfalls abhängig vom Kolben-Anpreßdruck.

Die funktionale Schicht 9 ist zwischen der Oberseite 2A der Trägerplatte 2 und dem Reibbelag 4 angeordnet. Die Schicht 9 wird beidseitig durch den Reibbelag und die Trägerplatte 2 geschützt. Nicht gezeigte elektrische Ableitungen werden an der Oberseite 2A der Trägerplatte 2 entlang auf deren Rückseite 2B geführt.

Im Bereich der Halterungen 3 sind zusätzliche oder alternative funktionale Schichten 10 angeordnet. Vorzugsweise sind diese Schichten in einem Bereich angeordnet, in dem die Trägerplatte 2 mit den Halterungen 3 in Anlage kommt. Bei dem dargestellten Ausführungsbeispiel ist dies die Innenseite der die Holme 3 aufnehmenden Öffnungen in der Trägerplatte. Denkbar ist auch eine Anbringung an den Holmen 3 selbst. Durch die Widerstandsänderung der Schichten 10 werden während eines Bremsvorgangs in Umfangsrichtung der Bremsscheibe 5 und damit in Umfangsrichtung des Reibbelages 4 wirkende Kräfte erfaßt. Die mit einem Pfeil 11 gekennzeichnete in der Zeichnungsebene nach links wirkende Umfangskraft preßt die Halterung 3 gegen die linke funktionale Schicht 10. Die Widerstandsänderung dieser Schicht wird über zwei kontaktierte Drähte 10A erfaßt.

In dem dargestellten Ausführungsbeispiel ist eine weitere Schicht, nämliche eine freiliegende funktionale Schicht 12 in der Nähe der funktionalen Schicht 8 auf der Rückseite 2B der Trägerplatte 2 angeordnet. Die Schicht 12 ist dem Anpreßdruck des Kolbens nicht ausgesetzt. Die Widerstandsänderung dieser unbelasteten Schicht kann verwendet werden, um entweder eine Systemtemperatur zu bestimmen, oder darüber hinaus den Temperaturanteil an der Widerstandsänderung einer belasteten Schicht zu korrigieren. Hierfür wird die bei einer Bremsung auftretende Widerstandsänderung der Schicht erfaßt. Die ermittelten Werte sind auf die Temperaturänderung zurückzuführen. Für die benachbarte druckbeaufschlagte Schicht 8 wird also eine Kompensationsgröße ermittelt, die es gestattet, den ermittelten Widerstandswert der Schicht 8 um einen eventuellen Temperaturanteil zu korrigieren. Selbstverständlich ist es ebenfalls denkbar, eine derartige freiliegende Schicht auf der Oberseite 2A der Trägerplatte 2 anzuordnen, die der Schicht 9 zugeordnet ist. Vorzugsweise haben die jeweils belastete und die unbelastete Schicht gleiche Eigenschaften und Abmessungen. Dies erleichtert die Abstimmung.

Im Rahmen des Erfindungsgedankens sind durchaus Abwandlungsmöglichkeiten gegeben. So ist im Zusammenhang mit dem Ausführungsbeispiel eine Scheibenbremse gezeigt. Gleichermaßen ist jedoch die Erfindung anwendbar auf beispielsweise eine Trommelbremse oder eine Kupplung. Auch sind mehrere Kolben 6 denkbar, die jeweils eine funktionale Schicht 7 tragen können.

Es sei noch einmal darauf hingewiesen, daß lediglich zur besseren Darstellung eine Mehrzahl von funktionalen Schichten in Figur 1 gezeigt sind. Tatsächlich ist die Erfindung bereits mit einer einzigen Schicht anwendbar. Als besonders vorteilhaft wird es jedoch angesehen, eine funktionale Schicht in Richtung der Druckbeaufschlagung des Reibbelags vorzusehen und eine weitere Schicht in Umfangsrichtung, wobei unter Umfangsrichtung im wesentlichen die Richtung quer zur Richtung der Druckbeaufschlagung verstanden wird. Im übrigen kann auch die Halterung der Trägerplatte variieren. Nur beispielsweise sei eine klauenartige Aufhängung der Trägerplatte genannt.

## Patentansprüche

1. Verfahren zum Messen von auf einen Reibbelag (4) eines Bremsbelags (1) einer Scheiben- oder Trommelbremse oder eines Kupplungsbelags einer Kupplung aufgebrachten Kräften,
wobei dem Reibbelag (4) als integraler Bestandteil des Bremsbelags (1) bzw. Kupplungsbelags mindestens eine funktionale Schicht (7, 8, 9) derart zugeordnet wird, daß sie von den auf den Reibbelag (4) wirkenden Kräfte belastet wird,
wobei sich der elektrische Widerstand der wenigstens einen funktionalen Schicht zumindest in einem Bereich mit den Reibbelag wirkenden Kräften ändert,
wobei der elektrische Widerstand der wenigstens einen funktionalen Schicht gemessen und aus dem gemessenen Widerstand die Kräfte ermittelt werden.

2. Verfahren nach Anspruch 1, **dadurch gekennzeichnet, daß** Druckkräfte aus dem elektrischen Widerstand ermittelt werden.

3. Verfahren nach Anspruch 1 oder 2, **dadurch gekennzeichnet, daß** Kräfte in Umfangsrichtung des Reibbelags ermittelt werden.

4. Verfahren nach Anspruch 2, **dadurch gekennzeichnet, daß** ein weiterer elektrischer Widerstand einer im wesentlichen in Umfangsrichtung des Reibbelags belasteten weiteren funktionalen Schicht (10) gemessen wird, wobei aus dem weiteren elektrischen Widerstand der Kraftanteil in Umfangsrichtung ermittelt wird und wobei die aus dem elektrischen Widerstand der funktionalen Schicht ermittelte Kraft um den Kraftanteil in Umfangsrichtung korrigiert wird.

5. Verfahren nach einem der Ansprüche 1 bis 4, **dadurch gekennzeichnet, daß** ein elektrischer Widerstand einer unbelasteten funktionalen Schicht gemessen wird, wobei aus dem elektrischen Widerstand der unbelasteten funktionalen Schicht ein Temperaturanteil ermittelt wird und wobei die aus dem elektrischen Widerstand der funktionalen Schicht und/oder aus dem weiteren elektrischen Widerstand der weiteren funktionalen Schicht ermittelte Kraft um den Temperaturanteil korrigiert wird.

6. Bremsbelag einer Scheiben- oder Trommelbremse oder Kupplungsbelag, mit
einer Trägerplatte (2),
einem gegebenenfalls unter Zwischenschaltung einer Underlayerschicht auf der Trägerplatte angeordneten Reibbelag und
mindestens einer der Trägerplatte (2) zugeordneten funktionalen Schicht zum Messen von auf den Reibbelag (4) aufgebrachten Kräften,
wobei die funktionale Schicht derart angeordnet ist, daß die auf den Reibbelag (4) wirkenden Kräften sie belasten,
wobei die funktionale Schicht einen elektrischen Widerstand aufweist, der sich zumindest in einem Bereich mit der Kraft ändert.

7. Brems- oder Kupplungsbelag nach Anspruch 6, **dadurch gekennzeichnet, daß** die funktionale Schicht (9) auf der Trägerplatte (2) und/oder zwischen der Underlayermasse und dem Reibbelag (4) angeordnet ist.

8. Brems- oder Kupplungsbelag nach Anspruch 7, **dadurch gekennzeichnet, daß** sich die funktionale Schicht im wesentlichen über die gesamte Längserstreckung des Reibbelags (4) erstreckt.

9. Brems- oder Kupplungsbelag nach einem der Ansprüche 6 bis 8, **dadurch gekennzeichnet, daß** die funktionale Schicht über eine Verdrahtung kontaktiert ist, wobei die Verdrahtung vorzugsweise über eine Steckverbindung lösbar ist.

## Claims

1. Method of measurement of forces applies to a friction lining (4) of a brake lining (1) of a disc or drum brake or of a clutch lining of a clutch, wherein at least one functional layer (7, 8, 9) is associated with the friction lining (4) as an integral component of the brake lining (1) in such a way that it is loaded by the forces acting on the friction lining (4), wherein the electrical resistance of the at least one functional layer changes at least in a region of forces acting with the friction lining, and wherein the electrical resistance of the at least one functional layer is measured and the forces are determined from the measured resistance.

2. Method as claimed in Claim 1, **characterised in that** pressing forces are determined from the electrical resistance.

3. Method as claimed in Claim 1 or 2, **characterised in that** forces are determined in the peripheral direction of the friction lining.

4. Method as claimed in Claim 2, **characterised in that** a further electrical resistance of a further functional layer (10) loaded substantially in the peripheral direction of the friction lining is measured, wherein the force component in the peripheral direction is determined from the further electrical resistance and wherein the force determined from the electrical resistance of the functional layer is corrected by the force component in the peripheral direction.

5. Method as claimed in any one of Claims 1 to 4, **characterised in that** an electrical resistance of an unloaded functional layer is measured, wherein a temperature component is determined from the electrical resistance of the unloaded functional layer, and wherein the force determined from the electrical resistance of the function layer and/or from the further electrical resistance of the further functional layer is corrected by the temperature component.

6. Brake lining of a disc brake or drum brake or clutch lining, with a support plate (2), a friction lining disposed on the support plate with an underlayer optionally interposed, at least one functional layer associated with the support plate (2) for the measurement of forces applied to the friction lining (4), wherein the functional layer is disposed in such a way that the forces acting on the friction lining load the functional layer, and wherein the functional layer has an electrical resistance which changes at least in one region with the force.

7. Brake or clutch lining as claimed in Clam 6 , **characterised in that** the functional layer (9) is disposed on the support plate (2) and or between the underlayer mass and the friction lining (4).

8. Brake or clutch lining as claimed in Claim 7, **characterised in that** the functional layer extends substantially over the entire longitudinal extent of the friction lining.

9. Brake or clutch lining as claimed in any one of Claims 6 to 8, **characterised in that** the functional layer is contacted via wiring, wherein the wiring is preferably releasable via a plug connection.

## Revendications

1. Procédé pour mesurer des forces appliquées à une garniture de friction (4) d'un patin de frein (1) d'un frein à disque ou à tambour ou d'un patin d'embrayage d'un embrayage, dans lequel au moins une couche fonctionnelle (7, 8, 9) est associée à la garniture de friction (4) comme composant intégral du patin de frein (1) ou selon le cas du patin d'embrayage, de telle façon qu'elle soit soumise aux forces appliquées à la garniture de friction (4), dans lequel la résistance électrique de cette au moins une couche fonctionnelle varie au moins dans une plage avec les forces agissant sur la garniture de friction, dans lequel la résistance électrique de cette au moins une couche fonctionnelle est mesurée et les forces sont déterminées à partir de la résistance mesurée.

2. Procédé selon la revendication 1, **caractérisé en ce que** l'on détermine des forces de compression à partir de la résistance électrique.

3. Procédé selon la revendication 1 ou 2, **caractérisé en ce que** l'on détermine des forces dans la direction périphérique de la garniture de friction.

4. Procédé selon la revendication 2, **caractérisé en ce que** l'on mesure une autre résistance électrique d'une autre couche fonctionnelle (10) sollicitée de friction, dans lequel on détermine la part des forces en direction périphérique à partir de l'autre résistance électrique et dans lequel on corrige la force déterminée à partir de la résistance électrique de la couche fonctionnelle avec la part de force en direction périphérique.

5. Procédé selon l'une quelconque des revendications 1 à 4, **caractérisé en ce que** l'on mesure une résistance électrique d'une couche fonctionnelle non sollicitée, dans lequel on détermine une part de température à partir de la résistance électrique de la couche fonctionnelle non sollicitée et dans lequel on corrige la force déterminée à partir de la résistance électrique de la couche fonctionnelle et/ou à partir de l'autre résistance électrique de l'autre couche fonctionnelle avec la part de température.

6. Patin de frein d'un frein à disque ou à tambour ou patin d'embrayage, avec
- une plaque de support (2),
- une garniture de friction disposée sur la plaque de support, éventuellement avec interposition d'une sous-couche,
- au moins une couche fonctionnelle associée à la plaque de support (2) pour mesurer des forces appliquées à la garniture de friction (4),
dans lequel la couche fonctionnelle est disposée de telle façon qu'elle soit sollicitée par les forces agissant sur la garniture de friction (4),
dans lequel la couche fonctionnelle présente une résistance électrique, qui varie avec la force au moins dans une plage.

7. Patin de frein ou d'embrayage selon la revendication 6, **caractérisé en ce que** la couche fonctionnelle (9) est disposée sur la plaque de support (2) et/ou entre la sous-couche et la garniture de friction (4).

8. Patin de frein ou d'embrayage selon la revendication 7, **caractérisé en ce que** la couche fonctionnelle s'étend sensiblement sur toute l'extension longitudinale de la garniture de friction (4).

9. Patin de frein ou d'embrayage selon l'une quelconque des revendications 6 à 8, **caractérisé en ce que** la couche fonctionnelle est mise en contact par l'intermédiaire d'un câblage, dans lequel le câblage est détachable de préférence par une liaison par fiche.
